# FASCICULE DE BREVET EUROPEEN

(11) **EP 1 916 135 B1**
(45) Date de publication et mention de la délivrance du brevet: **31.07.2013**
(21) Numéro de dépôt: 07119412.0
(22) Date de dépôt: 26.10.2007
(51) Int. Cl.: B60J 5/10, B60R 5/04, B62D 25/08, B62D 25/20

(54) **Module arrière destiné à être rapporté sur un véhicule automobile**
Hinteres Modul für die Anbringung auf einem Kraftfahrzeug
Rear module designed to be added to an automobile

(30) Priorité: 27.10.2006 FR 0654615
(43) Date de publication de la demande: 30.04.2008
(73) Titulaire: Compagnie Plastic Omnium, 69007 Lyon (FR)
(72) Inventeur: Delwal, Fabien, 01320, CHALAMONT (FR); Moulin, Jean-Paul, 01160, PRIAY (FR); Fillon, Jérôme, 69003, LYON (FR); Amorin, Guilherme, 01150, CHAZEY SUR AIN (FR); Cheron, Hugues, 01800, MEXIMIEUX (FR); André, Gérald, 01500, AMBERIEU EN BUGEY (FR)
(74) Mandataire: Thiollier, Clémence-Olivia Laure Marie

(56) Documents cités:
- EP-A- 1 634 745
- EP-A2- 1 078 795
- WO-A-2005/042287
- DE-A1- 10 338 755
- DE-A1- 10 342 933
- FR-A- 2 897 806
- US-A1- 2003 015 884
- US-A1- 2006 016 840
- US-B1- 6 220 649

## Description

La présente invention concerne un véhicule automobile avec un module arrière.

On connaît déjà, dans l'état de la technique, deux types de modules arrière.

Un premier type de module est composé d'un grand ouvrant, s'étendant depuis le toit jusqu'à un plancher inférieur du véhicule. Le problème d'un tel type d'ouvrant consiste en ce qu'il est particulièrement grand dans la direction verticale, si bien qu'il est encombrant lors de son ouverture, notamment dans la direction longitudinale du véhicule lorsque cet ouvrant est pivotant par rapport à un axe horizontal situé près du toit. En effet, lorsque l'on souhaite ouvrir cet ouvrant, il est nécessaire que l'arrière du véhicule soit dégagé pour que l'ouvrant puisse pivoter, ce qui est rarement le cas dans des zones de stationnement.

Le second type de module est composé d'un petit ouvrant, s'étendant depuis le toit du véhicule jusqu'à un panneau inférieur de carrosserie solidaire d'une pièce de structure inférieure du véhicule, prolongeant l'ouvrant vers le bas. Un tel ouvrant a une dimension moins grande dans la direction verticale, si bien qu'il est moins encombrant dans la direction longitudinale lorsqu'il est ouvert, ce qui est satisfaisant lorsque l'arrière du véhicule est peu dégagé. Néanmoins, ce second type d'ouvrant pose une difficulté d'accès au coffre du véhicule. En effet, pour charger ce coffre, il est nécessaire de faire passer les objets à charger par-dessus le panneau inférieur, à une hauteur supérieure à celle du plancher inférieur, ce qui demande des efforts supplémentaires pour les porter. En outre, un tel type d'ouvrant dégage une ouverture relativement petite pour accéder au coffre, ce qui est gênant pour charger les objets volumineux.

Le document US 2003/0015884 décrit un véhicule muni à la fois d'un grand et d'un petit ouvrant.

Par ailleurs, le document DE 103 42 933 décrit un plancher arrière ayant une hauteur variable.

On connaît dans l'état de la technique, notamment dans DE 103 38 755 montrant le préambule de la revendication 1, un module arrière permettant de remédier aux deux inconvénients ci-dessus. Ce module arrière est composé de deux ouvrants, un hayon, mobile autour d'un axe horizontal situé près du toit du véhicule, et une ridelle, mobile autour d'un axe horizontal situé près du plancher du véhicule. Cette ridelle porte un panneau inférieur de carrosserie, configuré pour s'étendre depuis le hayon vers une pièce de structure inférieure du véhicule, de façon à prolonger le hayon vers le bas lorsque l'ouvrant est en position fermée sur le véhicule. Dans ce cas, le véhicule comporte un plancher intermédiaire, agencé à une hauteur inférieure à la hauteur de sièges arrière du véhicule, cette hauteur correspondant sensiblement à la hauteur de la séparation entre le hayon et la ridelle. Ce plancher intermédiaire permet de séparer le coffre en deux compartiments, ce qui est pratique pour le rangement.

Ainsi, le hayon permet d'avoir accès au coffre sans pour autant demander un grand dégagement de l'arrière du véhicule, et la ridelle permet de charger le plancher inférieur du coffre sans pour autant avoir à passer par-dessus un panneau inférieur. En outre, le plancher intermédiaire permet de charger le compartiment supérieur uniquement, ce qui est plus pratique et évite que l'utilisateur ait à se baisser.

La présente invention vise à fournir une alternative à ce module arrière, tout en proposant un véhicule avec un module arrière remédiant aux problèmes énoncés ci-dessus.

A cet effet, l'invention concerne un véhicule automobile, selon la revendication 1.

Grâce à le module arrière, on dispose à la fois d'un ouvrant pouvant être de petite dimension, constitué par l'ouvrant lorsqu'il est désolidarisé du panneau inférieur, donnant accès au compartiment supérieur sans nécessiter un grand dégagement de l'arrière du véhicule, et d'un grand ouvrant, constitué par l'ouvrant lorsqu'il est solidarisé au panneau inférieur et que le panneau inférieur est désolidarisé de la pièce de structure inférieure du véhicule, de façon à offrir la possibilité de charger le plancher inférieur du coffre, sans avoir à passer par-dessus ce panneau inférieur.

En outre, l'invention est particulièrement intéressante car le module arrière comporte un unique système de pivotement, à savoir le système de pivotement de l'ouvrant, ce dernier portant éventuellement le panneau inférieur, alors qu'il est nécessaire, avec l'ouvrant de l'état de la technique, de prévoir deux systèmes de pivotement distincts, celui du hayon et celui de la ridelle, ce qui est bien moins pratique du point de vue encombrement, entretien, éventuels câblages, réparation.

L'invention comporte les caractéristiques suivantes:
- L'ouvrant comporte un cadre opaque, appelé petit cadre, portant une vitre arrière et un panneau de carrosserie opaque depuis l'extérieur agencé en-dessous de la vitre. Ainsi, l'ouvrant s'étend vers le bas au-delà de la zone permettant la rétrovision du conducteur. Le panneau de carrosserie opaque, lorsque le véhicule comporte en outre une plage arrière, évite que l'on puisse voir le contenu du coffre depuis l'extérieur. Ce panneau a la forme d'une bande, de largeur supérieure à la largeur des autres bords du cadre.
- Le panneau inférieur est porté par un cadre, appelé grand cadre, apte à obturer tout l'anneau arrière de caisse du véhicule. Dans ce cas, ce grand cadre reçoit l'ouvrant, et constitue ainsi un grand ouvrant, donnant accès à l'intégralité du coffre, ce qui est utile pour y charger les objets très volumineux, sachant que le plancher intermédiaire peut être monté de façon amovible sur le véhicule.

Le véhicule peut comporter l'une ou plusieurs des caractéristiques suivantes :
- Le compartiment supérieur est lui-même séparé en deux compartiments, à savoir un compartiment intermédiaire, délimité par le plancher intermédiaire, une plage arrière, le haut des dossiers de sièges arrière du véhicule et une partie inférieure de l'ouvrant, et un compartiment dit de vision, délimité par la plage arrière, le toit et l'ouvrant, de préférence par une vitre portée par l'ouvrant.
- Le plancher intermédiaire est apte à supporter une charge supérieure à 100 Kg, pouvant aller jusqu'à 200kg. Ainsi ce plancher constitue un seuil de compartiment solide, sur lequel on peut charger des objets lourds, qui se distingue d'une plage arrière ou d'un volet souple tel qu'un volet roulant.
- Le plancher intermédiaire est démontable ou mobile entre une position d'utilisation et une position escamotée, et éventuellement entre plusieurs positions intermédiaires. Dans le cas où il est démontable, on peut ôter le plancher et le stocker hors du véhicule afin de disposer ainsi d'un coffre de grande capacité. Dans le cas où il est mobile, le plancher peut prendre une position d'utilisation, dans laquelle il est à une hauteur intermédiaire, et une position escamotée ou position de repos, dans laquelle il est à une hauteur inférieure, par exemple en appui sur le plancher inférieur. Le plancher intermédiaire, dans sa position de repos ou dans sa position démontée, permet d'utiliser le coffre selon un mode « grand chargement », utile notamment lors d'utilisations exceptionnelles du véhicule, telles que des vacances ou un déménagement. Par ailleurs, le plancher intermédiaire, dans sa position de fonctionnement ou dans sa position montée, peut être utilisé selon un mode « chargement moyen », notamment lorsqu'il n'est pas indispensable d'avoir un grand coffre, ou encore lorsque l'arrière du véhicule n'est pas très dégagé.
- Le plancher intermédiaire est pliable.
- Dans le cas où le plancher est démontable, mobile ou encore pliable, on peut prévoir que, lorsque le panneau inférieur est en position fermée verrouillée, c'est-à-dire solidarisé à la pièce de structure inférieure, la cinématique du plancher intermédiaire est verrouillée, c'est-à-dire que le plancher est verrouillé en position d'utilisation. Ainsi, on dispose d'un compartiment inférieur présentant davantage de garanties d'inviolabilité, utilisable pour la mise en sécurité d'objets précieux.
- Le véhicule comporte des moyens de rappel permettant d'assister la mise en place du plancher intermédiaire dans sa position d'utilisation.
- Le plancher intermédiaire est à une hauteur H_{INTER} telle que 750 mm ≤ H_{INTER} ≤ 850 mm par rapport au sol.
- Le plancher intermédiaire a une longueur dans la direction longitudinale telle qu'il vient à affleurement avec la paroi intérieure du module arrière lorsque le plancher est en position d'utilisation. De même le plancher inférieur vient de préférence à affleurement avec la paroi intérieure du module arrière. Ainsi le compartiment inférieur peut être complètement fermé.

L'invention sera mieux comprise à la lecture de la description qui va suivre, donnée uniquement à titre d'exemple et faite en se référant à ce qui précède et aux figures, dans lesquelles :
- la figure 1 est une vue schématique en coupe d'un véhicule avec un module arrière selon l'invention ;
- la figure 2 est une vue schématique en coupe d'un véhicule comprenant un module similaire à celui de la figure 1 et un plancher intermédiaire en position basse ; et
- la figure 3 est une vue similaire à celle de la figure 2, le plancher intermédiaire étant en position haute.

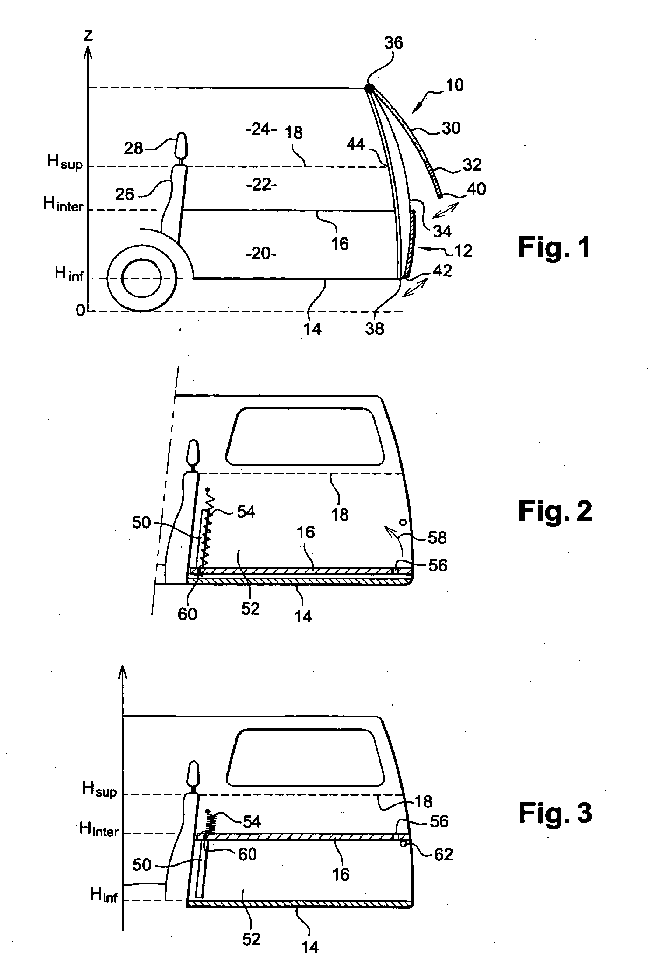

Comme on peut le voir sur la figure 1, un module arrière destiné à être rapporté sur un véhicule automobile comprend un ouvrant 10, mobile sur le véhicule entre une position ouverte et une position fermée. On appelle cet ouvrant 10 "petit ouvrant". L'ouvrant 10 comprend un petit cadre, portant une vitre arrière 30 et un panneau de carrosserie 32, opaque depuis l'extérieur du véhicule, agencé en dessous de la vitre 30.

Le module arrière comporte en outre un panneau inférieur 12, configuré pour s'étendre depuis l'ouvrant 10 vers une pièce 38 de structure inférieure du véhicule, de façon à prolonger l'ouvrant 10 vers le bas lorsque l'ouvrant 10 est en position fermée sur le véhicule. Le panneau inférieur 12 prolonge l'ouvrant vers le bas au moins sur toute la largeur de l'ouvrant 10. Le panneau inférieur 12 est porté par un cadre 34, appelé "grand cadre", de façon à former un "grand ouvrant", apte à obturer tout l'anneau arrière 44 de caisse du véhicule.

Le module est de préférence rapporté pré-équipé sur le véhicule, muni à la fois du petit 10 et du grand 34 ouvrants. On notera que le petit cadre et le grand cadre 34 ont un axe de pivotement commun 36, ce qui est particulièrement avantageux.

Le véhicule comporte par ailleurs un plancher inférieur 14 dont la surface supérieure est agencée à une hauteur inférieure H_{INF} par rapport au sol. Il comporte également un plancher intermédiaire 16, dont la surface supérieure est agencée à une hauteur inférieure H_{INTER}. Cette hauteur H_{INTER} correspond sensiblement à la hauteur de la séparation entre l'ouvrant 10 et le panneau inférieur 12 et est inférieure à une hauteur H_{SUP} correspondant à la hauteur de la séparation entre la vitre 30 et le panneau 32, à savoir en général la hauteur d'une plage arrière 18 ou la hauteur supérieure des dossiers 26 de sièges arrière du véhicule.

Comme on peut le voir sur la figure 1, le plancher intermédiaire 16 sépare le coffre du véhicule en deux compartiments, à savoir :
- un compartiment inférieur 20, délimité par le plancher inférieur 14, le plancher intermédiaire 16, le panneau inférieur 12 et le bas des dossiers 26, et
- un compartiment supérieur, réunion de compartiments 22 et 24, délimité par le plancher intermédiaire 16, le toit du véhicule et l'ouvrant 10.

Le compartiment supérieur 22, 24 est séparé en deux compartiments, à savoir :
- un compartiment intermédiaire 22, délimité par le plancher intermédiaire 16, une plage arrière 18 (en pointillés), le haut des sièges arrière 26 du véhicule et une partie inférieure 32 de l'ouvrant, et
- un compartiment dit de vision 24, délimité par la plage arrière 18, le toit du véhicule et l'ouvrant 10, de préférence par la vitre 30.

On notera que la hauteur H_{SUP} est de préférence délimitée par le haut des dossiers de sièges 26, et non par le haut des appuis-tête 28, qui seront généralement situés dans le compartiment de vision 24.

On notera que le plancher intermédiaire 16 est relativement solide, il peut notamment supporter une charge supérieure à 100 kg.

Par ailleurs, selon une configuration particulièrement avantageuse du véhicule,
- la hauteur H_{INF} du plancher inférieur 14 par rapport au sol, plus précisément de la surface supérieure du plancher inférieur 14 par rapport au sol, est telle que 450 mm ≤ H_{INF} ≤ 550 mm (millimètres) ; et/ou
- la hauteur H_{INTER} du plancher intermédiaire est telle que 750 mm ≤ H_{INTER} ≤ 850 m m ; et/ou
- la hauteur supérieure H_{SUP} est telle que 1000 mm ≤ H_{SUP} ≤ 1100 mm.

Par exemple, H_{INF} = 500 mm et H_{INTER} = 800 mm.

Selon un mode de réalisation particulièrement avantageux, le plancher intermédiaire 16 est démontable, c'est-à-dire que l'on peut le retirer du véhicule pour disposer d'un coffre pour les grands chargements, composé de la réunion des compartiments 20, 22, voire 24.

Selon un autre mode de réalisation, dont un exemple est représenté sur les figures 2 et 3, le plancher intermédiaire 16 est amovible, c'est-à-dire mobile entre une position de repos, ou position basse, ou encore position escamotée, représentée sur la figure 2, et une position de fonctionnement, ou position haute, ou encore position d'utilisation, représentée sur la figure 3. Selon l'exemple, le plancher intermédiaire 16 dans la position de repos est en appui sur le plancher inférieur 14, auquel cas on dispose d'un compartiment pour les grands chargements, comprenant au moins la réunion des compartiments 20 et 22 de la figure 1. En revanche, lorsque le plancher intermédiaire 16 est dans sa position de fonctionnement, il sépare ce grand compartiment en deux compartiments isolés 20, 22.

De façon avantageuse, le plancher 16 est mobile au moyen de glissières 50, ménagées dans la paroi de deux pièces 52 d'habillage latéral du véhicule, opposées l'une à l'autre, les glissières 50 étant de préférence au voisinage des sièges arrière 26. Le véhicule comporte en outre, de préférence cachés entre les pièces d'habillage 52 et la carrosserie extérieure du véhicule, des moyens de rappel 54, permettant de rappeler le plancher intermédiaire 16, de façon à lui faire prendre sa position de fonctionnement. Ces moyens de rappel 54 sont par exemple des ressorts en traction ou des vérins. Le plancher intermédiaire 16 comporte en outre une poignée 56, permettant à l'utilisateur de lui faire prendre sa position de fonctionnement ou de repos, voire des positions intermédiaires entre H_{INF} et H_{INTER}.

La mise en place du plancher intermédiaire dans sa position de fonctionnement va à présent être décrite. Sur la figure 2, le plancher intermédiaire 16 est dans sa position basse, en appui sur le plancher inférieur 14. L'utilisateur qui souhaite faire prendre sa position haute au plancher 16 peut soulever l'extrémité arrière du plancher 16, au moyen de la poignée 56, conformément à la flèche 58. Cette rotation du plancher 16 peut déverrouiller des ergots 60 qui étaient maintenus bloqués dans la partie inférieure de la glissière 50, si bien que les ergots 60 peuvent ensuite glisser dans la glissière 50 vers le haut, en étant rappelés par les moyens 54 qui assistent la montée du plancher 16 une fois les ergots 60 libérés. Une fois le plancher 16 dans sa position haute, les ergots 60 peuvent être verrouillés en position haute dans la glissière 50, et l'extrémité arrière du plancher 16 est maintenue en position de fonctionnement au moyen d'ergots 62 sur lesquels l'extrémité du plancher 16 s'appuie, comme on peut le voir sur la figure 3.

On peut prévoir d'autres façons de faire prendre sa position haute au plancher intermédiaire 16. En particulier, la poignée 56 peut actionner des câbles qui déclenchent le déverrouillage ou le verrouillage d'ergots tels que les ergots 60, afin de verrouiller le plancher 16 en position basse ou en position haute. On peut par ailleurs prévoir de passer d'une position à l'autre à l'aide de moyens motorisés, ce qui évite à l'utilisateur de faire des efforts pour passer de l'une des positions à l'autre. Par ailleurs, afin de passer de la position haute à la position basse, on peut prévoir que le poids du plancher 16 exerce une force supérieure à la force de rappel des moyens 54, si bien que le plancher passe de lui-même à sa position basse lorsque des ergots similaires aux ergots 60 sont déverrouillés. (

Le module arrière comportant le petit ouvrant 10 et le panneau inférieur 12 permet de disposer à la fois d'un petit ouvrant 10, permettant d'accéder à un compartiment supérieur sans nécessiter un grand dégagement à l'arrière du véhicule, et également d'un grand ouvrant 12, permettant de charger le plancher inférieur 14 du véhicule sans avoir à passer par-dessus le panneau inférieur 12.

En effet, on prévoit une serrure 40 pour solidariser l'ouvrant 10 et le panneau 12, ainsi qu'une serrure 42 pour solidariser le panneau 12 et la pièce de structure 38, si bien que le module peut avoir chacune des configurations suivantes :
- soit le panneau inférieur 12 est solidarisé à l'ouvrant 10 et désolidarisé de la pièce de structure inférieure 38 du véhicule,
- soit le panneau inférieur 12 est désolidarisé de l'ouvrant 10 et solidarisé à la pièce de structure inférieure 38.

On peut donc voir que, en jouant sur l'activation des serrures 40, 42, le panneau inférieur 12 peut être solidarisé à l'ouvrant 10, par l'intermédiaire du grand cadre 34, et désolidarisé de la pièce de structure inférieure 42, de façon à former, par l'association de l'ouvrant 10 et du panneau 12, un grand ouvrant.

## Revendications

1. Véhicule automobile comportant un plancher inférieur (14) et un plancher dit intermédiaire (16), agencé à une hauteur inférieure à la hauteur supérieure des dossiers de sièges arrière du véhicule, le plancher intermédiaire séparant le coffre en au moins deux compartiments, à savoir un compartiment inférieur (20), délimité par le plancher inférieur, le plancher intermédiaire, un panneau inférieur (12) et le bas de sièges arrière du véhicule, et un compartiment supérieur, délimité par le plancher intermédiaire, le toit du véhicule et un ouvrant (10), la hauteur de la séparation entre l'ouvrant (10) et le panneau inférieur (12) correspondant sensiblement à la hauteur du plancher intermédiaire (16), caracténsé en ce qu'il comporte un module arrière rapporté sur le véhicule et comportant :
- l'ouvrant (10), mobile sur le véhicule entre une position ouverte et une position fermée, comportant un cadre opaque, appelé petit cadre, portant une vitre arrière (30) et un panneau de carrosserie (32), opaque depuis l'extérieur, agencé en-dessous de la vitre,
- le panneau inférieur (12), configuré pour s'étendre depuis l'ouvrant vers une pièce (38) de structure inférieure du véhicule, de façon à prolonger l'ouvrant vers le bas lorsque l'ouvrant est en position fermée sur le véhicule, le panneau inférieur étant porté par un cadre (34), appelé grand cadre, apte à obturer tout l'anneau arrière (44) de caisse du véhicule, le module arrière pouvant avoir chacune des configurations suivantes : soit le panneau inférieur est solidarisé à l'ouvrant et désolidarisé de la pièce de structure inférieure du véhicule, soit le panneau inférieur est désolidarisé de l'ouvrant et solidarisé à la pièce de structure inférieure,
- le module arrière ne comportant qu'un unique système de pivotement, à savoir le système de pivotement de l'ouvrant.

2. Véhicule automobile selon la revendication 1, dans lequel le compartiment supérieur est lui-même séparé en deux compartiments, à savoir
- un compartiment intermédiaire (22), délimité par le plancher intermédiaire, une plage arrière, le haut des sièges arrière du véhicule et une partie inférieure de l'ouvrant, et
- un compartiment dit de vision (24), délimité par la plage arrière, le toit et l'ouvrant, de préférence par une vitre portée par l'ouvrant.

3. Véhicule automobile selon la revendication 1 ou 2, dans lequel le plancher intermédiaire (16) est apte à supporter une charge supérieure à 100 Kg.

4. Véhicule automobile selon l'une quelconque des revendications 1 à 3, dans lequel le plancher intermédiaire (16) est démontable.

5. Véhicule automobile selon l'une quelconque des revendications 1 à 4, dans lequel le plancher intermédiaire (16) est mobile entre une position d'utilisation, dans laquelle il est à une hauteur intermédiaire, et une position escamotée, dans laquelle il est à une hauteur inférieure, par exemple en appui sur le plancher inférieur (14).

6. Véhicule automobile selon la revendication 5, comportant des moyens de rappel (54) permettant d'assister la mise en place du plancher intermédiaire (16) dans sa position de fonctionnement.

7. Véhicule automobile selon l'une quelconque des revendications 1 à 6, dans lequel le plancher intermédiaire est à une hauteur H_{INTER} telle que 750 mm≤ H_{INTER} 850 mm.

## Patentansprüche

1. Kraftfahrzeug, das einen unteren Fußboden (14) und einen so genannten Zwischenfußboden (16) aufweist, der in einer Höhe eingerichtet ist, die niedriger ist als die obere Höhe von Rückenlehnen von Rücksitzen des Fahrzeugs, wobei der Zwischenfußboden den Kofferraum in mindestens zwei Räume teilt, nämlich in einen unteren Raum (20), der von dem unteren Fußboden, dem Zwischenfußboden, einer unteren Platte (12) und der Unterseite der Rücksitze des Fahrzeugs abgegrenzt wird, und in einen oberen Raum, der von dem Zwischenfußboden, dem Dach des Fahrzeugs und einer Tür (10) abgegrenzt wird, wobei die Höhe der Trennung zwischen der Tür (10) und der unteren Platte (12) im Wesentlichen der Höhe des Zwischenfußbodens (16) entspricht, **dadurch gekennzeichnet, dass** es ein hinteres Modul aufweist, das an das Fahrzeug angebaut ist und Folgendes aufweist:
- die Tür (10), die an dem Fahrzeug zwischen einer offenen Position und einer geschlossenen Position beweglich ist, die einen undurchsichtigen Rahmen, kleiner Rahmen genannt, aufweist, der eine Heckscheibe (30) und eine Karosserietafel (32) trägt, die von außen her undurchsichtig ist, die unterhalb der Scheibe eingerichtet ist,
- die untere Platte (12), die konfiguriert ist, um sich von der Tür hin zu einem Teil (38) der unteren Struktur des Fahrzeugs derart zu erstrecken, dass die Tür zu der Unterseite verlängert ist, wenn die Tür in geschlossener Position an dem Fahrzeug ist, wobei die untere Platte von einem Rahmen (34), großer Rahmen genannt, getragen wird, der geeignet ist, um den gesamten hinteren Ring (44) der Fahrzeugkarosserie zu verschließen, wobei das hintere Modul jede der folgenden Konfigurationen haben kann: Entweder ist die untere Platte fest mit der Tür verbunden und nicht mit dem unteren Strukturteil des Fahrzeugs verbunden, oder die untere Platte ist nicht mit der Tür verbunden und fest mit dem unteren Strukturteil verbunden,
- wobei das hintere Modul nur ein einziges Schwenksystem aufweist, nämlich das Schwenksystem der Tür.

2. Kraftfahrzeug nach Anspruch 1, bei dem der obere Raum selbst in zwei Räume geteilt ist, nämlich
- einen Zwischenraum (22), der von dem Zwischenfußboden, einer Heckablage, der Oberseite der Rücksitze des Fahrzeugs und einem unteren Teil der Tür abgegrenzt ist, und
- einen so genannten Visionsraum (24), der von der Heckablage, dem Dach und der Tür, vorzugsweise durch eine Scheibe, die von der Tür getragen wird, abgegrenzt ist.

3. Kraftfahrzeug nach Anspruch 1 oder 2, bei dem der Zwischenfußboden (16) geeignet ist, um eine Last von mehr als 100 kg zu tragen.

4. Kraftfahrzeug nach einem der Ansprüche 1 bis 3, bei dem der Zwischenfußboden (16) demontierbar ist.

5. Kraftfahrzeug nach einem der Ansprüche 1 bis 4, bei dem der Zwischenfußboden (16) zwischen einer Gebrauchsposition, in der er auf einer Zwischenhöhe liegt, und einer eingefahrenen Position, in der er auf einer unteren Höhe liegt, zum Beispiel in Anlage auf dem unteren Fußboden (14), beweglich ist.

6. Kraftfahrzeug nach Anspruch 5, das Rückholmittel (54) aufweist, die es erlauben, das Anbringen des Zwischenfußbodens (16) in seiner Betriebsposition zu unterstützen.

7. Kraftfahrzeug nach einem der Ansprüche 1 bis 6, bei dem der Zwischenfußboden auf einer Höhe H_{INTER}, von zum Beispiel 750 mm ≤ H_{INTER} ≤ 850 mm ist.

## Claims

1. A motor vehicle having a bottom floor (14) and an "intermediate" floor (16) arranged at a height lower than the height of the tops of the backs of the rear seats of the vehicle, the intermediate floor subdividing the trunk into at least two compartments, namely a bottom compartment (20) defined by the bottom floor, the intermediate floor, a bottom panel (12) and the bottoms of the rear seats of the vehicle, and a top compartment defined by the intermediate floor, the roof of the vehicle and a hatch (10), the height of the subdivision between the hatch (10) and the bottom panel (12) corresponding substantially to the height of the intermediate floor (16), the vehicle being **characterized in that** it includes a rear module fitted to the vehicle and comprising:
- the hatch (10), movable on the vehicle between an open position and a closed position, having an opaque frame referred to as a "small" frame, carrying a rear window (30) and a bodywork panel (32), that is opaque from the outside and arranged under the window;
- the bottom panel (12), configured to extend from the hatch towards a bottom structural part (38) of the vehicle so as to extend the hatch downwards when the hatch is in the closed position on the vehicle, the bottom panel being carried by a frame (34), referred to as the "large" frame, suitable for shutting the entire rear opening (44) of the vehicle body, the rear module being capable of having each of the following configurations, either the bottom panel is secured to the hatch and not secured to the bottom structural part of the vehicle, or else the bottom panel is not secured to the hatch and is secured to the bottom structural part; and
- the rear module has only a single pivot system, i.e. the system for pivoting the hatch.

2. A motor vehicle according to claim 1, wherein the top compartment itself is subdivided into two compartments, namely:
- an intermediate compartment (22) defined by the intermediate floor, a back shelf, the tops of the back seats of the vehicle and a bottom portion of the hatch; and
- a so-called "vision" compartment (24) defined by the back shelf, the roof and the hatch, and preferably by a window carried by the hatch.

3. A motor vehicle according to claim 1 or claim 2, wherein the intermediate floor (16) is suitable for supporting a load of more than 100 kg.

4. A motor vehicle according to any one of claims 1 to 3, wherein the intermediate floor (16) is removable.

5. A motor vehicle according to any one of claims 1 to 4, wherein the intermediate floor (16) is movable between a utilization position in which it is at an intermediate height, and a retracted position in which it is at a low height, e.g. pressed against the bottom floor (14).

6. A motor vehicle according to claim 5, including return means (54) serving to assist placing the intermediate floor (16) in its operating position.

7. A motor vehicle according to any one of claims 1 to 6, wherein the intermediate floor is at a height H_{INTER} such that 750 mm ≤ H_{INTEE} ≤ 850 mm.
